## Europäisches Patentamt

## European Patent Office

## Office européen des brevets

(19)

(11) Veröffentlichungsnummer: **0 024 681**
**B1**

(12)
# EUROPÄISCHE PATENTSCHRIFT

(45) Veröffentlichungstag der Patentschrift:
**12.10.83**

(51) Int. Cl.³: **B 62 J 5/00,** B 60 Q 1/26,
B 60 L 1/00

(21) Anmeldenummer: **80104938.8**

(22) Anmeldetag: **20.08.80**

(54) **Elektrische Anlage in einem Fahrzeug, insbesondere Zweirad.**

(30) Priorität: **22.08.79 CH 7647/79**

(43) Veröffentlichungstag der Anmeldung:
**11.03.81 Patentblatt 81/10**

(45) Bekanntmachung des Hinweises auf die Patenterteilung:
**12.10.83 Patentblatt 83/41**

(84) Benannte Vertragsstaaten:
**DE FR GB IT NL SE**

(56) Entgegenhaltungen:

**DE-A-2 441 868**
**DE-C-611 264**
**US-A-3 489 999**
**US-A-3 559 164**

(73) Patentinhaber: **Reichle + De-Massari AG
Elektroingenieure, Binzstrasse 31, CH-8620 Wetzikon
(CH)**

(72) Erfinder: **Reichle, Hans, Guldislooweg 16,
CH-8620 Wetzikon (CH)**

(74) Vertreter: **Petschner, Goetz, Patentanwaltsbüro G.
Petschner Seidengasse 18, CH-8001 Zürich (CH)**

ACTORUM AG

Elektrische Anlage in einem Fahrzeug, insbesondere Zweirad

Die vorliegende Erfindung betrifft eine elektrische Anlage an einem Fahrzeug, insbesondere Zwei-Rad, mit einer stromerzeugenden elektrischen Maschine und mit mindestens einem elektrischen Verbraucher, in deren Stromkreis ein Akkumulator eingeschaltet ist.

Es ist bekannt, dass die stromerzeugende elektrische Maschine bei solchen Anlagen in der Regel eine Dynamomaschine ist, bei welcher mechanische Arbeit in elektrische Energie umgewandelt wird. Bei nicht motorisch angetriebenen Fahrzeugen, insbesondere Velos, muss diese mechanische Arbeit aber durch Muskelkraft aufgebracht werden, was bedeutet, dass bei Stillstand keine und bei langsamer Fahrt nur wenig elektrische Energie erzeugt wird. Stillstehende oder langsam bewegte Velos sind somit nicht oder nur mangelhaft beleuchtet, was deren Betriebsgefahr bei Dunkelheit oder trübem Wetter wesentlich erhöht. Diese Betriebsgefahr wird auch weiter durch den Umstand vergrössert, dass die eingeschaltete Dynamomaschine einen hohen Drehwiderstand darstellt, was einen Velofahrer die Dynamomaschine nur ungern einschalten lässt.

Andererseits ist durch die US-Patentschrift 3 489 999 bekannt geworden, in eine elektrische Anlage an einem Fahrzeug mit einer stromerzeugenden elektrischen Maschine und mit mindestens einem elektrischen Verbraucher einen Akkumulator einzuschalten, um einen wiederaufladbaren Speicher vorzusehen.

Aufgabe der vorliegenden Erfindung ist es nun, freie Beschleunigungs- und/oder Bremskräfte zur Stromerzeugung heranzuziehen und den Akkumulator auf diese Weise aufzuladen, um bei Stillstand oder Langsamfahrt eine ausreichende elektrische Energie zur Verfügung zu haben.

Dies wird erfindungsgemäss dadurch erreicht, dass dem Akkumulator eine Regeleinrichtung vorgeschaltet ist und sich im Stromkreis der Anlage ein auf eine Neigung des Fahrzeuges durch ein befahrenes Gefälle und/oder durch einen Bremsvorgang bewirkte Verzögerung den Stromkreis schliessendes Schaltmittel befindet.

Durch diese erfindungsgemässen Massnahmen ist es nunmehr möglich, den Akkumulator nur auf Gefällstrecken oder bei Bremsvorgängen aufzuladen, indem nur dann der äussere Stromkreis der elektrischen Maschine durch die Schaltmittel geschlossen wird. In diesem Fall wird der erhöhte Drehwiderstand an der elektrischen Maschine durch die Beschleunigung auf der Gefällstrecke wenigstens teilweise kompensiert bzw. unterstützt dieser Drehwiderstand den eingeleiteten Bremsvorgang. Auf ebener Strecke hingegen sind die Schaltmittel offen, so dass kein Strom fliessen kann, in welchem Fall an der elektrischen Maschine nur die Lagerreibung u.a. überwunden werden muss.

Sinngemäss könnte dieser Vorgang natürlich auch bei Motorfahrzeugen ausgenützt werden, indem ein Laden des Akkumulators nur bei Bremsvorgängen erfolgen würde. Auf diese Weise lässt sich Treibstoff einsparen und die Beschleunigung verbessern. Als Schaltdefinition könnte dabei die Druckdifferenz bei Schub zwischen dem Ansaugrohr und dem Kurbelgehäuse dienen.

Bei einer bevorzugten Ausführungsform der erfindungsgemässen elektrischen Anlage können sich der Akkumulator und das Schaltmittel in einem Nebenschluss-Stromkreis befinden, wobei ein Umschalter ein wahlweises Einschalten des Haupt-Stromkreises oder des Nebenschluss-Stromkreises gestattet.

Ferner kann das Schaltmittel entweder im Nebenschluss-Stromkreis durch einen mit einem Bremshebel verbundenen Schalter überbrückbar oder als Zweifachschalter sowohl bei einer Neigung des Fahrzeuges als auch beim Auftreten von Bremskräften am Fahrzeug wirksam sein.

Vorzugsweise ist ferner die elektrische Maschine eine Dynamomaschine und dann insbesondere ein Naben-Dynamo, bei welchem zur Erregung des Magnetfeldes der Maschinenstrom selbst verwendet wird. Beim Anlaufen des Dynamos genügt dabei die Remanenz der Feldmagneten, um einen Induktionsstrom zu erzeugen, der dann seinerseits das Magnetfeld weiter verstärkt.

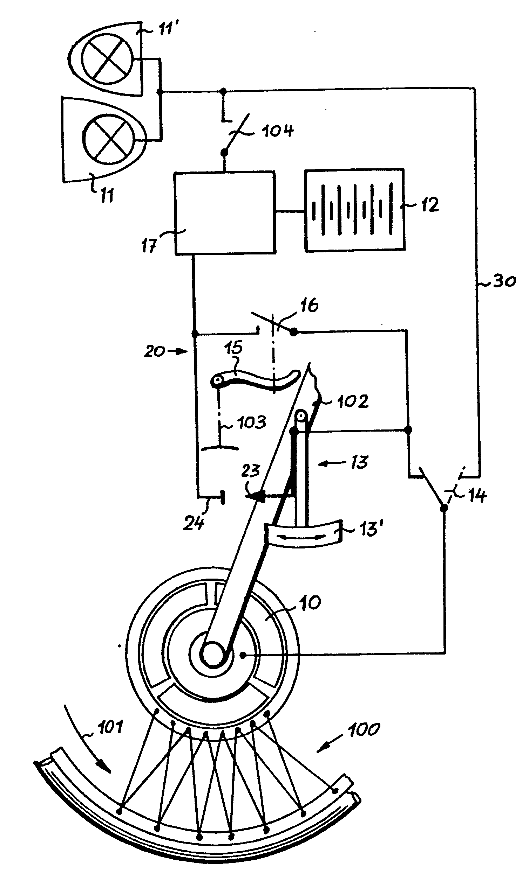

Eine beispielsweise Ausführungsform des Erfindungsgegenstandes wird nachfolgend anhand der Zeichnung, welche die erfindungsgemässe elektrische Anlage an einem Velo, in schematischer Darstellung zeigt, näher erläutert.

Die dargestellte elektrische Anlage umfasst hier eine elektrische Maschine 10 in Form eines Naben-Dynamos an einem Velo-Rad 100, dessen Vorwärts-Drehrichtung durch den Pfeil 101 angegeben ist. Die das Rad 100 stützende Velogabel ist mit 102 bezeichnet, welche Velogabel 102 auch eine mechanische Handbremse 102 abstützt.

Der Verbraucher an der elektrischen Anlage wird hier durch eine Velo-Lampe 11 und ein Rücklicht 11' gebildet, die parallel geschaltet sind.

Über einen Umschalter 14 ist nun der Verbraucher 11, 11' direkt über einen Haupt-Stromkreis 30 oder indirekt über einen Nebenschluss-Stromkreis 20 an den Naben-Dynamo 10 anschliessbar.

Die Verbindung der Verbraucher 11, 11' mit dem Dynamo 10 über den Haupt-Stromkreis 30 stellt eine bisher übliche Velo-Beleuchtungsanlage dar. Hingegen bildet die Verbindung der Verbraucher 11, 11' mit dem Dynamo 10 über den Nebenschluss-Stromkreis 20 den Erfindungsgegenstand.

Der erfindungsgemässe Nebenschluss-Stromkreis 20 umfasst einen Akkumulator 12, dem eine Regeleinrichtung 17 vorgeschaltet ist, über welche der Akkumulator 12 aufgeladen wird und/oder über welche Regeleinrichtung 17 der Akkumulator 12 die Verbraucher 11, 11' mit elektrischer Energie versorgt. Hierbei ist den Verbrauchern 11, 11' zweckmässig ein Ein-Aus-Schalter 104 vorgeschaltet.

Zwischen der durch die Regeleinrichtung 17 gebildeten Eingangsseite des Akkumulators 12 und dem Dynamo-Ausgang ist nun ein sogenannter Neigungsschalter 13 eingeschaltet, der ein Quecksilber-Schalter oder ein Wippen-Schalter oder dgl. sein kann. Im gezeigten Beispiel ist der Schalter 13 mit einer Wippe 13′ versehen, welche den beweglichen Kontaktarm 23 trägt, der mit dem ortsfesten Kontakt 24 dann in Berührung ist, wenn sich das Velo auf einer Gefällstrecke neigt. Hierfür ist die Wippe 13′ vorzugsweise an der Velogabel 102 bzw. am Velorahmen angelenkt. Das Ganze kann sich aber auch im Gehäuse der Velolampe 11 befinden.

Durch geeignete Aufhängung und Ausbildung kann der vorbeschriebenen Schalter 13 aber auch dann ansprechen, wenn das Velo abgebremst wird, in dem das Beharrungsvermögen der Wippe 13′ dann die Kontakte 23, 24 schliesst.

Anstelle dieser Variante kann aber auch für die Stromerzeugung bei einem Bremsvorgang der Schalter 13 durch einen mit dem Bremshebel 15 der Handbremse 103 verbundenen Schalter 16 überbrückt werden.

Der genannte Neigungsschalter 13 kann im übrigen mit Dämpfungsmitteln sowie insbesondere mit einem Potentiometer gekoppelt sein für eine stufenlose Regelung des Ladestromes in Abhängigkeit der Neigung des Gefälles bzw. der unterschiedlichen Verzögerungskraft beim Bremsen.

**Patentansprüche**

1. Elektrische Anlage an einem Fahrzeug, insbesondere Zwei-Rad, mit einer stromerzeugenden elektrischen Maschine (10) und mit mindestens einem elektrischen Verbraucher (11), in deren Stromkreis ein Akkumulator (12) eingeschaltet ist, dadurch gekennzeichnet, dass dem Akkumulator (12) eine Regeleinrichtung (17) vorgeschaltet ist und sich im Stromkreis der Anlage ein auf eine Neigung des Fahrzeuges durch ein befahrenes Gefälle und/oder durch einen Bremsvorgang bewirkte Verzögerung den Stromkreis schliessendes Schaltmittel (13) befindet.

2. Elektrische Anlage nach Anspruch 1, dadurch gekennzeichnet, dass sich der Akkumulator (12) und das Schaltmittel (13) in einem Nebenschluss-Stromkreis (20) befinden, wobei ein Umschalter (14) das wahlweise Einschalten des Haupt-Stromkreises (30) oder des Nebenschluss-Stromkreises (20) gestattet.

3. Elektrische Anlage nach Anspruch 1, dadurch gekennzeichnet, dass das Schaltmittel (13) im Nebenschluss-Stromkreis (20) durch einen mit einem Bremshebel (15) verbundenen Schalter (16) überbrückbar ist.

4. Elektrische Anlage nach Anspruch 1, dadurch gekennzeichnet, dass die elektrische Maschine (10) eine Dynamomaschine ist.

5. Elektrische Anlage nach Anspruch 4, dadurch gekennzeichnet, dass die Dynamomaschine (10) ein Naben-Dynamo ist.

**Revendications**

1. Installation électrique sur un véhicule, en particulier sur une bicyclette, avec une machine électrique génératrice de courant (10) et avec au moins un consommateur électrique (11), dans le circuit de courant de laquelle est monté un accumulateur (12), caractérisée en ce qu'avant l'accumulateur (12) est monté un dispositif de régulation (17) et dans le circuit de courant de l'installation se trouve un moyen commutateur (13) fermant le circuit de courant lors d'un ralentissement provoqué, à la suite d'une inclination du véhicule, par une pente parcourue et/ou par une opération de freinage.

2. Installation électrique selon la revendication 1, caractérisée en ce que l'accumulateur (12) et le moyen commutateur (13) se trouvent dans un circuit de courant dérivé (20), auquel cas un commutateur (14) permet l'enclenchement sélectif du circuit de courant principal (30) ou du circuit de courant dérivé (20).

3. Installation électrique selon la revendication 1, caractérisée en ce que le moyen commutateur (13) dans le circuit de courant dérivé (20) peut être court-circuité par un interrupteur (16) relié à un levier de freinage (15).

4. Installation électrique selon la revendication 1, caractérisée en ce que la machine électrique (10) est une machine dynamo-électrique.

5. Installation électrique selon la revendication 4, caractérisée en ce que la machine dynamo-électrique (10) est une dynamo sur moyeu.

**Claims**

1. An electrical equipment on a vehicle, in particular on a two-wheeled vehicle, with a current-producing electric machine (10), and with at least one electrical consuming device (11), in the electric circuit of which an accumulator battery (12) is connected, characterized in that a regulator (17) is connected in series to the accumulator battery (12), and that in the electric circuit of the construction a switch means (13) is arranged that closes the electric circuit when the vehicle is brought into a position of inclination by a travelled descent and/or by a retardation caused by the application of the brakes.

2. An electrical equipment as in claim 1, characterized in that the accumulator battery (12) and the switch means (13) are positioned in a shunt circuit (20), whereby a changeover switch (14) permits the optional switching on of the main circuit (30) or the shunt circuit (20).

3. An electrical equipment as in claim 1, characterized in that the switch means (13) in the shunt circuit (20) can be bypassed by a switch (16) that is connected with a brake lever (15).

4. An electrical equipment as in claim 1, characterized in that the electric machine (10) is a dynamo.

5. An electrical equipment as in claim 4, characterized in that the dynamo is a hub dynamo.